# EUROPEAN PATENT APPLICATION

(11) **EP 4 704 195 A1**
(43) Date of publication of application: **04.03.2026**
(21) Application number: 23935548.0
(22) Date of filing: 28.04.2023
(51) Int. Cl.: H01M 8/02, H01M 8/0241, H01M 4/88, B82Y 30/00

(54) **BIPOLAR PLATE FOR FUEL CELLS AND METHOD FOR MANUFACTURING SAME**

(71) Applicant: MCD Technologies S.a.r.l, 3364 Leudelange (LU)
(72) Inventor: GALKOV, Mikhail Sergeevich, Novosibirsk region, 633003 (RU); SAIK, Vladimir Oskarovich, Indija, 22320 (RS); SMIRNOV, Sergei Nikolaevich, Las Cruces, NM, 88011 (RU)
(74) Representative: Dennemeyer & Associates S.A.
(86) International application number: PCT/RU2023/000131
(87) International publication number: WO 2024/225932

(57) **Abstract**

The invention relates to electrically conductive composite materials based on thermoplastic polymers containing carbon nanotubes, and to methods for manufacturing the same. The invention further relates to electrically conductive thin plates for use as bipolar plates in fuel cells, including, proton exchange membrane fuel cells. The present invention proposes a method for producing thin electrically conductive plates, and further proposes a thin bipolar plate with a thickness of less than 1 mm for a high-temperature fuel cell, said plate having gas transport channels on the surface thereof and containing a composite material comprised of a thermoplastic polymer and single-walled and/or double-walled carbon nanotubes, wherein the composite material contains connected regions having a carbon nanotube concentration of more than 1 wt.%, and domains having a size of less than 200 µm and a local concentration of carbon nanotubes of less than 1 wt.%.

## Description

### TECHNICAL FIELD

The invention relates to electrically conductive composite materials based on thermoplastic polymers containing carbon nanotubes and methods of making the same. The invention also relates to electrically conductive thin plates used as bipolar plates in fuel cells, including those with proton exchange membranes.

### BACKGROUND OF THE INVENTION

The bipolar plates are one of the key components of the PEM (Proton Exchange Membrane or Polymer Electrolyte Membrane) fuel cells and contribute the greatest contribution to their weight and cost. The bipolar plates must have high electrical conductivity, mechanical strength, corrosion resistance and low gas permeability. Various composite bipolar plates have been developed to achieve these properties of the high conductive thin plates. Most of these are made by compression molding polymers (thermoplastic or thermosetting resins) filled with conductive particles such as graphite powders or carbon fibers.

Electrically conductive fillers have to be incorporated into their composition to impart electrical conductivity to the polymers, which generally leads to a reduction in mechanical strength, since it is difficult to obtain simultaneously a high electrical conductivity and good mechanical properties using such hard and brittle fillers such as graphite and carbon fibers. Thus, there are certain difficulties in manufacturing very thin plates that are most important to reduce the weight of the fuel cell. In addition, the highly acidic environment needed to operate the bipolar plate, especially at elevated temperature conditions, significantly narrows the class of applicable thermoplastic polymers. Currently, there is a significant growth of interest in a proton exchange membrane operating at elevated temperatures due to the greater efficiency and stability of the catalysts that can be operated with hydrogen and other limited quality fuel.

In article [T.M. Besmann, J.W. Klett, J.J. Henry, E. Lara-Curzio, Carbon/Carbon Composite Bipolar Plate for Proton Exchange Membrane Fuel Cells J. Electrochem. Soc. (2000) Vol. 147, pp. 4083-4086], polymers are used only at the initial stage of plate formation and are subsequently carbonized. Carbon-containing composite bipolar plates have been developed, made in several steps, including the production of carbon fiber/phenolic resin preforms followed by compression molding, followed by pyrolysis and surface compaction by chemical vapor infiltration. The plates have a high electrical conductivity of about 200-300 S/cm. However, the manufacturing process of the plate is too complex and the resulting material has a thickness of 2 mm and has a limited strength (reported 36.5 MPa tensile strength). Meanwhile, it is desirable for the tensile and flexural strength of the plate material to be at least 60 MPa and the thickness of the plate reached less than 1 mm.

Composite materials of polymers with carbon nanotubes are provided in some sources. US Pat. No. 7,056,452,B2 [IPC: H01B1/24, C08J3/21, CO8K7/24] discloses a polymeric composite material comprising polyvinylidene fluoride (PVDF) or a copolymer of polyvinylidene fluoride and another monomer; and carbon nanotubes in an amount of from about 0.01 to 30% by weight of said composite material, said carbon nanotubes having a diameter of less than about 100 nm, and wherein said polymer composite material has a electrical resistivity of less than about 10 Ohm·cm. The present patent also discloses a method of producing an electrically conductive composite material which comprises the steps of: (a) dissolving a polymer selected from the group consisting of polyvinylidene fluoride and a copolymer of vinylidene fluoride and another monomer in a solvent to form a solution; (b) dispersing the nanotubes in said solution; and (c) adding a precipitating component to said solution to deposit a composite material comprising a polymer and a nanotube, wherein the composite material has a electrical resistivity of less than 10 Ohm·cm.

The method proposed above is very complex and comprises the steps of dissolving polyvinylidene fluoride, dispersing the nanotubes in solution, and further precipitation. This method requires large volumes of solvent, the dispersion of carbon nanotubes in the solution requires high energy costs, the resulting dispersions have high viscosity and their mixing with the precipitation component is not a simple task. After precipitation and filtration, it is necessary to remove residual solvent from the precipitate. These technological difficulties are particularly severe if single-walled carbon nanotubes are used. US Pat. No. 7,056,452 B2 [IPC: H01B 1/24, C08J3/21, CO8K7/24] describes embodiments with only multi-walled carbon nanotubes. The use of single-walled carbon nanotubes in the method disclosed in US Pat. No. 7,056,452 B2 [IPC: H01B1/24, C08J3/21, CO8K7/24] is impossible.

Meanwhile, it is known that single-walled carbon nanotubes provide high electrical conductivity and have the greatest impact on the mechanical properties of composite materials compared to multi-walled carbon nanotubes. Single-walled carbon nanotubes have high mechanical strength (ultimate tensile stress over 50 GPa), high thermal and electrical conductivity. The nanotubes are characterized by ballistic conduction of electrons on a sub-micrometer scale within a single nanotube. The conductivity along the bundles or filaments reaches 1 MS/cm. Single-walled carbon nanotubes have a diameter in the range of 0.7-5 nm and are theoretically not limited in length. For example, commercially available material from OCSiAl, Tuball ^{™}, has a single-walled carbon nanotube length of more than 5 cm and a diameter in the range of 1,6 ± 0.4 nm. The aspect ratio (length, L, to diameter, D) of single-walled carbon nanotubes is very high and can exceed several thousand. Due to the interaction of van der Waals forces (π- π interaction), single-walled carbon nanotubes tend to agglomerate, forming ordered bundles, which in turn may have an even higher aspect ratio. The high L/D ratios of the bundles of carbon nanotubes effectively enhance the electrical conductivity in the composite material at low concentrations of carbon nanotubes. Single-walled carbon nanotubes and bundles thereof, unlike multi-walled carbon nanotubes, are flexible and can take any shape at bending, which is of course important for their use as an electrically conductive and reinforcing additive in composite materials for bipolar plates produced by the method of compression molding. The properties of double-walled carbon nanotubes (DWCNT) are similar to the those of single-walled carbon nanotubes.

The bipolar plates should have a high electrical conductivity of at least 2 S/cm, preferably more than 10 S/cm. Such electrical conductivity is achieved at a high concentration of conductive filler, for example, by using single-walled and/or double-walled carbon nanotubes with a concentration exceeding several % by weight. Adding the filler to the polymer composite melt/solution in an amount of from several wt.% to several tens of wt.% is not a difficult task for carbon black, graphite, short fibers and even for multi-walled carbon nanotubes. However, for single-walled or double-walled carbon nanotubes, the process of their introduction into the composite melt/solution is complicated due to their extremely high L/D ratio, as noted above. It is therefore suggested in some patent documents to add several different fillers: a minor amount of carbon nanotubes and up to 70% by weight of graphite and/or carbon fibers. This approach improves the electrical conductivity, however the mechanical properties of the composite material are deteriorated, for example, the brittleness is increased. Furthermore, the brittle material cannot be used for thin plates with a thin structure of gas channels on the surface.

US Pat. No. 7629070B2 [IPC: H01M8/02, H01B1/24] describes bipolar plates for fuel cells with proton exchange membranes that include at least a mixture of two mutually immiscible polymers thereof comprising from 15 to 65 wt.% carbon fillers, wherein the polymer mixture comprising as carbon fillers electrically conductive carbon in an amount of from 1 to 30 wt.%, carbon fibers in an amount of 5 to 60 wt.%, and carbon nanotubes in an amount of 1 to 25 wt.%, based on the total weight of the polymer mixture. In addition to the use of three different kinds of conductive fillers with different L/D ratios, this invention proposes to use a mixture thereof with at least two immiscible polymers, wherein the polymer mixture comprises at least one polyamide and at least one polyetherketone or polyethersulfone as miscible polymers In this case, the at least two mixed polymers form a joint continuous structure, and the carbon fillers are in a higher concentration in one of the mixed polymers or in the phase between the polymer blend, or where the polymer blend in which the carbon fillers are at a higher concentration forms a continuous conductive matrix in which the at least one mixed polymer is intercalated. This approach makes it possible to increase the electrical conductivity and reduce the required concentration of fillers, including carbon nanotubes However, this imposes severe limitations on the polymer composition-it is necessary to use at least two immiscible polymers, which complicates the preparation process and inevitably reduces the chemical and/or thermal stability of the composite material. The immiscible nature of the polymers suggests their significant difference in chemical nature, and therefore it is unlikely that both polymers have comparable thermal and chemical stability. US Pat. No. 7,62,907,0B2 [IPC: H01M8/02, H01B 1/24] is exemplified by a blend of polyetherketone (PEEK) and polyamide (PA), where the polyamide is the weakest link: it rapidly decomposes at a temperature above 280°C and dissolves in strong acids while the polyether ketone is chemically more stable and melted at 343°C Essentially, the polyetherketone in this mixture plays the role of an inert powder rather than the second thermoplastic polymer.

Thus, there is a technical problem to produce thin bipolar plates with a high conductivity of more than 2 S/cm and a flexural strength above 60 MPa, in which the above mentioned drawbacks of the manufacturing process are eliminated. The most important and desirable characteristics of thin bipolar plates, apart from high electrical conductivity and strength, are high thermal and chemical stability and low weight.

### DISCLOSURE OF THE INVENTION

The present invention provides a method for producing thin electrically conductive plates that includes the steps of:
(1) mixing a powder of single-walled and/or double-walled carbon nanotubes and a thermoplastic polymer powder at a temperature not exceeding the glass transition temperature of the thermoplastic polymer (T_{g}) to form a mixture, the particles of which consist of a core of the thermoplastic polymer and a shell of carbon nanotubes;
and (2) compression molding the mixture obtained in step (1) at a temperature above the glass transition temperature of the thermoplastic polymer (T_{g}) by at least 100 K to form a thin plate of a predetermined shape.

The proposed method can be used for manufacturing a bipolar plate with a thickness of less than 1 mm for high-temperature fuel cells with a proton exchange membrane comprising a composite material: a thermoplastic polymer and single-walled and/or double-walled carbon nanotubes, and having gas-transporting channels on the surface. The composite material of the bipolar plate contains connected regions with a concentration of carbon nanotubes of more than 1 wt.%, and domains that are less than 200 microns in size, with a local concentration of carbon nanotubes of less than 1 wt.%.

In such a composite material, single-walled and/or double-walled carbon nanotubes are generally concentrated outside such domains of a low-content single-walled and/or double-walled carbon nanotube polymer. The higher local concentration of single-walled and/or double-walled carbon nanotubes allows for higher electrical conductivity and mechanical strength. The manufacturing method is simple enough and allows to form thin plates with a thickness of less than 1 mm, preferably less than 0.5 mm, most preferably less than 0.2 mm and the size of the surface elements (e.g. gas channels) of less than 100 µm.

Single-walled and double-walled carbon nanotubes have diameters greater than 0.7 nm and less than 10 nm, preferably greater than 1.2 nm and less than 4 nm. They have a length greater than 100 nm and less than 50 µm, preferably greater than 500 nm and less than 20 µm. When there is a difference in the sizes of the two types of mixed particles, and if these particles tend to coalesce (agglomerate) with each other, they naturally form the core-shell particles with larger particles as the core and the smaller particles forming the shell. In the case of single-walled and/or double-walled carbon nanotubes, their ability to bend and agglomerate into bundles leads to the formation of a dense shell around the polymer core.

It is preferred that 90 wt.% of the particles of the mixture obtained in step (1) have a size of more than 10 µm, most preferably wherein 90 wt.% of the particles have a size of less than 200 µm, even more preferably 90 wt.% of the powder particles of the mixture obtained in step (1) have a size of less than 150 µm. Preferably, 99 wt.% of the powder particles of the mixture obtained in step (1) have a size of less than 1 mm.

Mixing the powder of single-walled and/or double-walled carbon nanotubes and thermoplastic polymer powder may be accomplished by any type of powder mixer, including paddle mixers, ribbon mixers, two-shaft mixers, drum mixers, planetary mixers, or any other known mixer, not limited to the examples provided.

It is important to mix the powder of single-walled and/or double-walled carbon nanotubes and thermoplastic polymer powder at a temperature not exceeding the glass transition temperature of the polymer (T_{g}) in order to prevent agglomeration of the polymer particles. Still more preferably, the mixing is carried out at a temperature below the glass transition temperature of the polymer (T_{g}) by at least 20 K or at least 50 K to avoid local heating of the powder to a temperature above the glass transition temperature during mixing of the single-walled and/or double-walled carbon nanotubes and the thermoplastic polymer powder. In some embodiments, it is preferred that the mixing temperature in step (1) does not exceed the Vogel temperature of the thermoplastic polymer.

The thermoplastic polymer may be any of thermoplastic polymers or elastomers or biopolymers. However, for use in bipolar plates, it is preferred that the thermoplastic polymer be one of thermally stable thermoplastic polymers selected from the group: polyvinylidene fluoride (PVDF), polyphenylene sulfide (PPS), polyethersulfone (PES), polysulfone (PSU), polyphenylene sulfone (PPSU) or polyetheretherketone (PEEK), or copolymers thereof or derivatives thereof, but are not limited to the examples given.

At the stage of the compression molding of the mixture, it is important that the molding temperature exceeded the glass transition temperature of the thermoplastic polymer (Tg) by at least 100 K to provide the desired mobility of the thermoplastic polymer to form a shell of single-walled and/or double-walled carbon nanotubes and forming a uniform electrically conductive plate For some embodiments, it is acceptable that the compression molding temperature of the mixture exceeds the glass transition temperature of the thermoplastic polymer (T_{g}) by at least 150 K This allows accelerating the compression molding process. For some embodiments, it is preferred that the compression molding temperature of the mixture exceeds the glass transition temperature of the thermoplastic polymer (T_{g}) by at least 250 K. For some embodiments, it is preferred that the compression molding temperature of the mixture exceeds the melting temperature of the thermoplastic polymer (Tₘ).

For some embodiments of the invention, the compression molding process is carried out in an inert gas atmosphere.

Due to the non-uniform distribution of single-walled and/or double-walled carbon nanotubes in the thin plate composite material, the required electrical conductivity is achieved at a lower concentration of carbon nanotubes than in the case of uniform distribution This is due to the fact that the electrical conductivity and strength of the composite material are provided by connected areas with a high concentration of single-walled and/or double-walled carbon nanotubes. Thus, the weight ratio of the content of single-walled and double-walled carbon nanotubes to the content of the thermoplastic polymer in the mixture obtained in process step (1) may be less than 0.1 or less than 0.03, or less than 0.02, or less than 0.01. However, most preferably, the weight ratio of the content of single-walled and double-walled carbon nanotubes to the content of the thermoplastic polymer in the mixture is more than 0.01 and less than 0.3. For some embodiments, it is most preferred that the weight ratio of the content of single-walled and double-walled carbon nanotubes to the content of the thermoplastic polymer in the mixture is from 0.05 to 0.25 by weight.

The single-walled and/or double-walled carbon nanotube powder used in the present invention may be used both in raw form or be chemically and/or thermally treated for purification, or functionalization, or defunctionalization, or doping, or chemical modification before they are mixed with the thermoplastic polymer powder If higher electrical conductivity values are to be achieved, single-walled and/or double-walled carbon nanotubes may undergo chemical doping. One of the chemical modifications includes purification from the residual catalyst, which may significantly affect the amount of functional oxygen-containing functional groups on the walls of the single-walled carbon nanotubes. The oxygen-containing functional groups on the surface of single-walled carbon nanotubes contribute to better adhesion of single-walled carbon nanotubes to the polymer matrix and may be added to the surface of single-walled carbon nanotubes by heating them into oxygen-saturated atmosphere or, if necessary, removed by heating the carbon nanotubes in an inert atmosphere.

The single-walled and/or double-walled carbon nanotubes used in the present invention may be both closed-ended and open-ended. The chemical and/or thermal treatment of single-walled and/or double-walled carbon nanotubes can be used to open or close the ends of the carbon nanotubes.

The single-walled and/or double-walled carbon nanotube powder used in the present invention may include metals from Groups 8-11 of the Periodic Table, e.g., iron (Fe), or cobalt (Co), or nickel (Ni), or ruthenium (Ru), or rhodium (Rh), or palladium (Pd), or iridium (Ir), or platinum (Pt), or copper (Cu), or silver (Ag), or gold (Au), or alloys thereof, or carbides thereof, but are not limited to the examples that are impurities due to a method for producing single-walled and/or double-walled carbon nanotubes. The metal particles may be coated with graphite shells that also originate from the carbon nanotube production process.

The present invention provides a thin bipolar plate with a thickness of less than 1 mm for a high-temperature fuel cell having gas transporting channels on the surface and comprising a composite material of thermoplastic polymer and single-walled and/or double-walled carbon nanotubes, characterized in that the composite material contains connected regions with a concentration of carbon nanotubes of more than 1 wt.%, and domains that are less than 200 microns in size, with a local concentration of carbon nanotubes of less than 1 wt.%.

For some embodiments, it is preferred that the size of the domains with a local carbon nanotube concentration of less than 1% by weight is less than 100 µm.

The bipolar plate produced by the method of the present invention may be thinner than bipolar plates known in the art, resulting in a significant reduction in the weight of the bipolar fuel cell. The lower density of the composite material also helps reduce the weight of the bipolar battery. A bipolar plate having a thickness of about 2 mm can be obtained by numerous methods known in the art, including those described above.

An advantage of the present invention becomes apparent for a bipolar plate with a thickness of less than 1 mm: thinner plates have a lower weight and a lower drop in electrical resistance through it. For some embodiments, it is preferred that the thickness of the bipolar plate is less than 0.5 mm. For other embodiments, it is most preferred that the thickness of the bipolar plate is less than 0.2 mm.

As the examples below show, the thin plates produced according to this method have a bulk electrical conductivity above 2 S/cm, and some-above 10 S/cm. The high electrical conductivity results in a lower surface electrical resistance of the bipolar plate. Preferably, the bipolar plate has a surface electrical resistance of 10 Ohm/square or less. Most preferably, the bipolar plate has a surface electrical resistance of 1 Ohm/square or less.

The composite material of the bipolar plate, especially for a thin one, should have high mechanical strength to withstand the stresses occurring during operation of the fuel cell. It is important that the flexural strength of the material be greater than 60 MPa. Preferably, the bipolar plate has a flexural modulus of 5 GPa or more at a temperature of 25° C.

Additional features and advantages of the invention are set forth in the detailed description of embodiments of the invention, which follows.

It should be understood that the foregoing general description of the invention and the following description of embodiments of the invention are exemplary and are intended to further disclose the invention as claimed.

### BRIEF DESCRIPTION OF THE DRAWINGS

FIG. 1 Transmission electron microscopy of single-walled carbon nanotubes used to produce thin bipolar plates in Examples 1-4.
FIG. 2. Optical micrographs of core-shell particles with polyphenylene sulfide (PPS) core coated with single-walled carbon nanotubes shell and obtained in step (1) in Example 1. The horizontal size of the image is 300 µm.
FIG. 3 Core-shell particles size distribution (µm) with a polyphenylene sulfide (PPS) core coated with single-walled carbon nanotube shell and obtained in step (1) in Example 1.
FIG. 4 Optical micrograph of a 0.2 mm thick bipolar plate produced in the reflected-light mode for Example 1. The horizontal dimension of the frame is 1 mm. The central groove was intentionally made using a copper wire of *ca.* 85 µm diameter to illustrate the ability to produce very thin elements in the sample.
FIG. 5 Optical micrograph of a 0.2 mm thick bipolar plate in a reflected-light mode with polarizers for Example 1. The horizontal size of the image is 600 microns.
FIG. 6: Flexural strength of the bipolar plate, (MPa, squares, left axis) and electrical conductivity (S/cm, circles, right axis) as a function of the mass fraction of single-walled carbon nanotubes in the plate composite material at 25° C. for Examples 1-4. Filled labels for Examples 1-3 and empty labels for Example 4, where doped carbon nanotubes were used.
FIG. 7 shows the ultimate bending strength (MPa) versus temperature (° C) for 0.2 mm thick bipolar plates for Example 1 (squares) and Example 2 (circles).
FIG. 8 Transmission electron microscopy image of a mixture of single-walled and double-walled carbon nanotubes used to produce thin bipolar plates in Example 5.
FIG. 9. The electrical conductivity (S/cm) of the bipolar plate of Examples 1-3 (empty squares) and Examples 6-7 (filled diamonds), as a function of the mass fraction of single-walled carbon nanotubes in the composite plate material.
Table 1: Mechanical and electrically conductive properties of thin plates 0.2 mm thick according to Examples 1-5. PPS - polyphenylene sulfide, SWCNT - single-walled carbon nanotubes, DWCNT - double-walled carbon nanotubes, Rₛ - surface electrical resistance (Ohm/square), σᵥ - electrical conductivity, S/cm.
Table 2. The mechanical and electrically conductive properties of the thin plates of Examples 8-13. PSU - polysulfone, PPSU - polyphenylene sulfone, PEEK - polyetheretherketone, σᵥ - electrical conductivity, S/cm.

**Table 1.**

| Example, Nº | Components | Mass ratio of SW&DWCNT to polymer | Rs, Ω | σᵥ, S/cm | Flexural strength, MPa | Flexural modulus of elasticity, GPa | Maximum strain, % |
|---|---|---|---|---|---|---|---|
| - | PPS | 0 | > 10¹² | 0 | 35 | 4,6 | 1,1 |
| 1 | PPS, SWCNT | 0,176 | 1,32 | 38 | 112 | 8,8 | 1,8 |
| 2 | PPS, SWCNT | 0,11 | 3,1 | 16 | 80 | 6,1 | 1,5 |
| 3 | PPS, SWCNT | 0,053 | 15,2 | 3,3 | 60 | 5,4 | 1,4 |
| 4 | PPS, SWCNT | 0,185 | 0,49 | 103 | 80 | 8,1 | 1,9 |
| 5 | PPS, SWCNT and DWCNT | 0,176 | 2,3 | 22 | 103 | 8,5 | 1,8 |

**Table 2.**

| Example, Nº | Components | Mass ratio SWCNT/polymer | Plate thickness, mm | Tmeas., °C | σᵥ, S/cm | Flexural strength, MPa |
|---|---|---|---|---|---|---|
| 8 | PSU, SWCNT | 0,15 | 0,18 | 182 | 2 | 37 |
| 9 | PSU, SWCNT | 0,075 | 0,12 | 25 | 7 | 105 |
| 10 | PPSU, SWCNT | 0,205 | 0,25 | 27 | 63 | 137 |
| 11 | PPSU, SWCNT | 0,28 | 0,11 | 201 | 27 | 31 |
| 12 | PEEK, SWCNT | 0,165 | 0,31 | 23 | 14 | 167 |
| 13 | PEEK, SWCNT | 0,30 | 0,18 | 234 | 3 | 27 |

### EMBODIMENTS OF THE INVENTION

Preferred embodiments of the present invention are described in detail below, examples of which are illustrated in the accompanying drawings.

Transmission electron microscopy studies were conducted using JEM-2010 (JEOL). Images of optical micrographs were made using a Leica DM 2700 P microscope. The particle size distribution was obtained in an aqueous dispersion using a Malvern Mastersizer 3000. The specific electrical conductivity of the plate (σᵥ) was calculated from the resistivity of the bipolar plate (Rₛ), as
σᵥ = 1/(Rₛ·d), where d is the thickness of the plate. The surface electrical resistance of the bipolar plate (Rₛ) was measured using an inductive method on EddyCus^{®} TF lab 2020 Series from Suragus. Flexural strength and flexural modulus were measured on dried samples using a Shimadzu AGS-5-20KNXD Universal Test Machine with a 20 kN load cell according to ASTM D790. The strength values and flexural modulus were taken as averaged over 3 samples.

For convenience, the information of the exemplary thin plates is also given in Tables 1 and 2.

### Example 1.

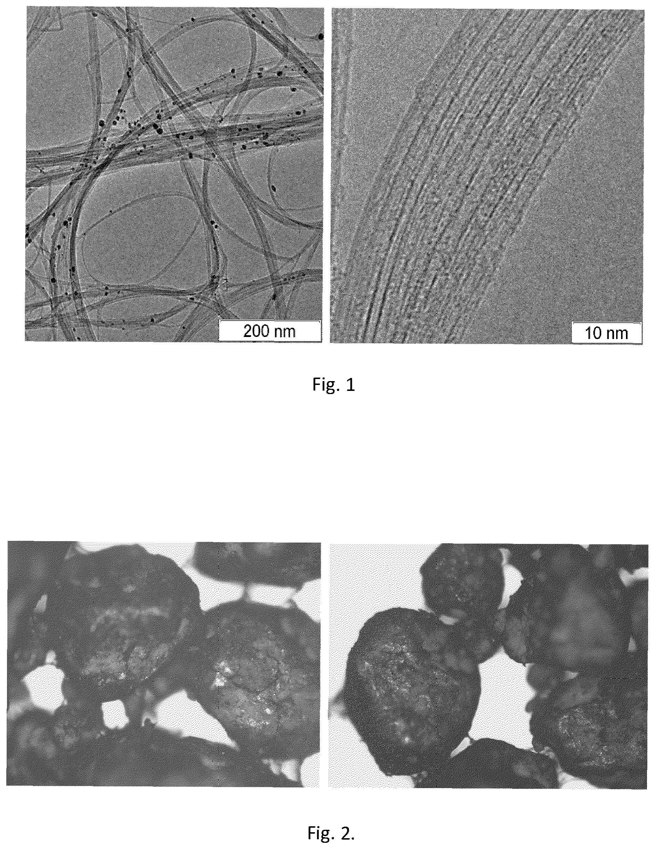

A 0.2 mm thick thin plate was made as follows: 8.5 g polyphenylene sulfide (PPS) powder, a polymer with a glass transition temperature, T_{g} = 115°C and 1,5 g of single-walled carbon nanotubes (OCSiAl, Tuball ^{™}) with a diameter of 1,6 ± 0.2 nm and a length of more than 5 µm were mixed in a grinding mixer LM -201 (OOO Plaun, Russia) for 30 seconds at room temperature. Transmission electron microscopy images of used single-walled carbon nanotubes are shown in FIG. 1. The resulting mixture consists of particles with a polymer core covered by a shell of single-walled carbon nanotubes. A micrograph of the resulting powder is shown on FIG. 2.

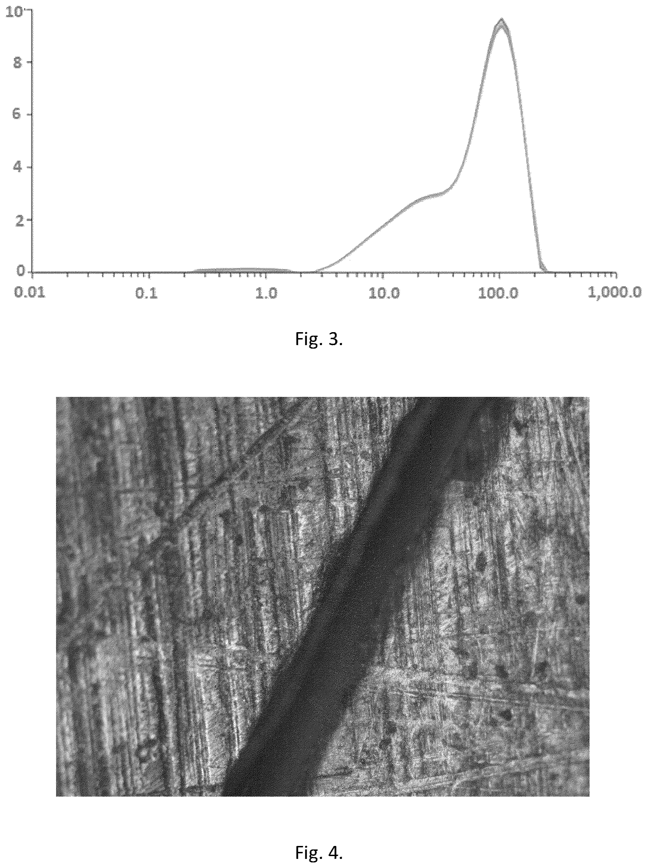

The particle size distribution of the thermoplastic polymer mixture and single-walled carbon nanotubes was determined in an aqueous dispersion using a Malvern Mastersizer 3000. The distribution is shown on FIG. 3. D10 of the powder was 12.5 µm, D50 of the powder was 72 µm, D90 of the powder was 145 µm. That is, 90 wt.% of the powder has a size of more than 12.5 µm and more than 90 wt.% of the powder has a size of less than 145 µm.

The resulting mixture of black colour with a weight ratio of single-walled carbon nanotubes to polymer content of 0.176 (or 15 wt.%) was placed in a compression mold defining the desired shape of the bipolar plate, 0.2 mm deep, and compression molding was performed at 290°C under a pressure of 10 MPa for 30 seconds. The images of the optical micrograph of the resulting bipolar plate are shown on FIG. 4.

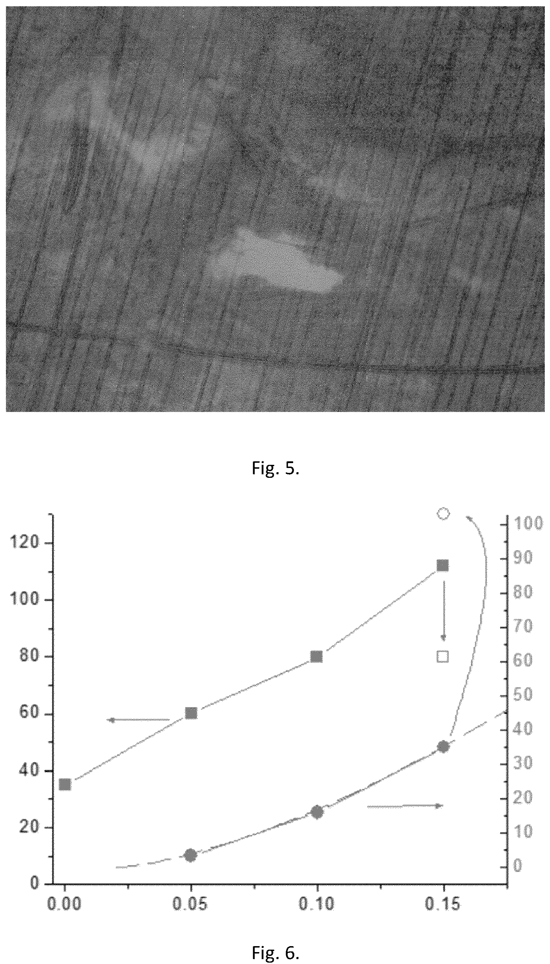

FIG. 5 is a photograph showing a non-uniform distribution of single-walled carbon nanotubes in a composite material of a polyphenylene sulfide/single-walled carbon nanotube bipolar plate.

Connected regions with a high content of single-walled carbon nanotubes are visible as dark and domains with a low content of single-walled carbon nanotubes as lighter areas. The concentration of single-walled carbon nanotubes can be assessed by the degree of darkness of the region by comparison with reference samples of well homogenized polyphenylene sulfide/single-walled carbon nanotubes mixtures with a known concentration of single-walled carbon nanotubes. The concentration of single-walled carbon nanotubes in light domains is less than 1 wt.%, in the lightest regions, less than 0.1% by weight. The domains containing single-walled and/or double-walled carbon nanotubes are less than 1 wt.%, are limited to a size of 200 µm or less.

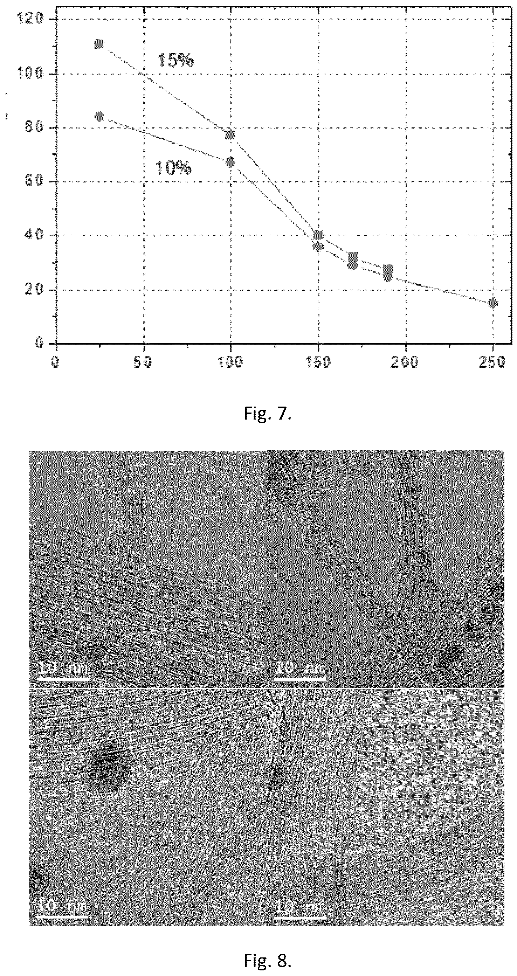

The surface electrical resistance of a 0.2 mm thick bipolar plate was 1,43 Ohm/square, which corresponds to a specific volumetric conductivity of 35 S/cm. The measured flexural strength was 112 MPa. The resulting mechanical and electrically conductive properties of the bipolar plate are shown in Table 1 and on FIG. 6 (filled labels for a mass fraction of SWCNTs = 0.15). The temperature dependence of the bending strength of the bipolar plate is shown on FIG. 7 (square marks).

The bipolar plate may be made of different thicknesses by varying the depth of the mold shape or thickness in the mold. According to the method bipolar plates with a thickness of from several mm to less than 0.1 mm can be made.

### Example 2

A 0.2 mm thick thin plate was made similar to Example 1, however using 9.0 g of polyphenylene sulfide (PPS) powder and 1,0 g of single-walled carbon nanotubes. The weight ratio of the content of single-walled carbon nanotubes to the content of the polymer in the mixture prepared in step (1) was 1: 9 = 0.11. The particle size distribution of the powder of the mixture of thermoplastic polymer and single-walled carbon nanotubes, determined in the aqueous dispersion using a Malvern Mastersizer 3000, is characterized by D10 of the powder of 12 µm, D50 of the powder was 67 µm, D90 of the powder was 135 µm.

The surface electrical resistance of a 0.2 mm thick bipolar plate was 3.1 Ohm/square, which corresponds to an electrical conductivity of 16 S/cm. The measured flexural strength was 80 MPa. The resulting mechanical and electrically conductive properties of the bipolar plate are shown in Table 1 and on FIG. 6 (labels for the mass fraction of SWCNT = 0.1). The temperature dependence of the bending strength of the bipolar plate is shown on FIG. 7 (round marks).

### Example 3

A thin 0.2 mm thick bipolar plate was made similar to Example 1, however using 9.5 g of polyphenylene sulfide (PPS) powder and 0.5 g of single-walled carbon nanotubes. The weight ratio of the content of single-walled carbon nanotubes to the polymer content of the mixture prepared in step (1) was 0.053. The particle size distribution of the mixture powder is characterized by D10 powder values of 11 µm, D50 powder of 64 µm and D90 powder of 130 µm. The surface electrical resistance of a 0.2 mm thick bipolar plate was 15.2 Ohm/square, which corresponds to a specific volumetric conductivity of 3.3 S/cm. The measured flexural strength was 60 MPa. The resulting mechanical and electrically conductive properties of the bipolar plate are shown in Table 1 and on FIG. 6 (marks for the mass fraction of SWCNTs = 0.05).

### Example 4

A thin 0.2 mm thick bipolar plate was made similar to Example 1, however, using chemically treated (doped) single-walled carbon nanotubes Single-walled carbon nanotubes (OCSiAl, Tuball ^{™}) were mixed with an aqueous solution of dopant (H₃PO₄), held in solution for one day, evaporated and dried The weight ratio of the dopant content to the content of single-walled carbon nanotubes in the doped nanotubes was 1:4. The mixing step was carried out using 8.13 g of polyphenylene sulfide powder and 1.87 g of single-walled carbon nanotubes doped with H₃PO₄ The weight ratio of the content of doped single-walled carbon nanotubes to the polymer content of the mixture prepared in step (1) was 0.185 (15 wt.% SWCNTs) The use of doped single-walled carbon nanotubes made it possible to further reduce the surface electrical resistance of a 0.2 mm to 0.49 Ohm/square bipolar plate and to increase the specific volumetric conductivity of up to 103 S/cm, which is almost three times higher than that of a 15 wt.% non-doped single-walled carbon nanotubes (Example 1). The use of doped single-walled carbon nanotubes also resulted in a lower bending strength of up to 80 MPa, which is still very high. The resulting mechanical and electrically conductive properties of the bipolar plate are shown in Table 1 and on FIG. 6 (empty dots).

### Example 5

A thin 0.2 mm thick bipolar plate was made similar to Example 1, however using a mixture of single-walled and double-walled carbon nanotubes. The powder of single-walled and double-walled carbon nanotubes used contained 9.8 wt.% of metallic iron nanoparticles coated with graphite shells (impurity) due to the method for producing carbon nanotubes. Transmission electron micrographs of a mixture of single-walled and double-walled carbon nanotubes are shown on FIG. 8. The number of double-walled carbon nanotubes is about 80 wt.% of the total weight of the carbon nanotubes.

The mixture is characterized by a weight ratio of single-walled and double-walled carbon nanotubes to polymer content of 0.176. The particle size distribution of the mixture powder is characterized by D10 powder values of 16 µm, D50 powder of 90 µm and D90 of 160 µm powder. The resulting mixture was placed in compression mold defining the desired shape of the bipolar plate with a depth of 0.2 mm and compression moulding carried out at a temperature of 290°C under a pressure of 10 MPa for 30 seconds.

The surface electrical resistance of the resulting bipolar plate with a thickness of 0.2 mm was 2.3 Ohm/square, which corresponds to a bulk conductivity of 22 S/cm. The measured flexural strength was 103 MPa. The flexural modulus was 8.5 MPa. The resulting mechanical and electrically conductive properties of the bipolar plate are shown in Table 1. Surface electrical resistance and bending strength of the bipolar plate prepared using a mixture of single-walled and double-walled carbon nanotubes are close to the values obtained for the thin bipolar plate in Example 1 (only with single-walled carbon nanotubes).

### Example 6

A thin 0.2 mm thick bipolar plate was made similar to Example 1, however using 9.0 g of polyvinylidene fluoride powder (PVDF, Solef 5130 from Solvay) and 1,0 g of single-walled carbon nanotubes (OCSiAl, Tuball ^{™}). The mixture obtained after step (1) (black powder) contained particles with a PVDF core and a shell of single-walled carbon nanotubes, the weight ratio of the content of single-walled carbon nanotubes to PVDF content was 0.11.

The particle size distribution of the mixture was determined in an aqueous dispersion using a Malvern Mastersizer 3000. D10 of the mixture was 14 µm, D50 of the mixture was 70 µm, D90 of this powder was 155 µm.

The mixture of polymer and single-walled carbon nanotubes obtained in step (1) was placed in a mold defining the desired shape of the bipolar plate, 0.2 mm deep, and compression moulded at a temperature of 230°C under a pressure of 10 MPa for 30 seconds. Using the molds, plates with different thicknesses were obtained, from several mm to less than 0.1 mm.

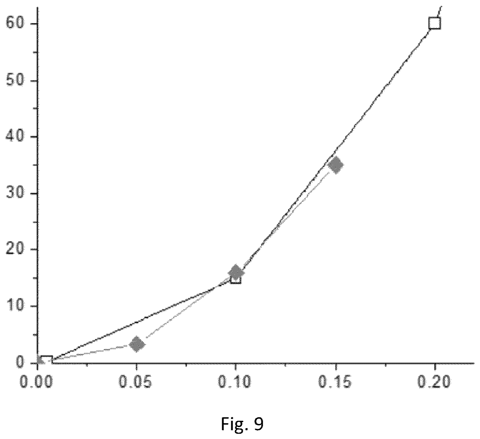

The surface electrical resistance of a 0.2 mm thick bipolar plate was 3.3 Ohm/square, which corresponds to a specific volumetric conductivity of 15 S/cm. The resulting electrically conductive properties of the bipolar plate are shown on FIG. 9.

### Example 7

A 0.2 mm thick thin bipolar plate was made similar to Example 6, however the weight ratio of single-walled carbon nanotubes to polymer content in the mixture was 0.25. The particle size distribution of the mixture was determined in an aqueous dispersion using a Malvern Mastersizer 3000. D10 of the mixture was 17 µm, D50 of the mixture was 70 µm, D90 of this powder was 140 µm.

The surface electrical resistance of a 0.2 mm thick bipolar plate was 0.83 Ohm/square, which corresponds to a specific volumetric conductivity of 60 S/cm. The resulting electrically conductive properties of the bipolar plate are shown on FIG. 9.

### Example 8

A thin bipolar plate was made as follows: 15 g of polysulfone (PSU, Udel^{®} P -3500 LCD MBZ, T_{g} = 185° C. Tₘ = 330° C.) was ground into a powder on a grinding mixer LM -201 (Plaun Ltd. (Russia)) for 60 seconds, cut-off of 14-200 µm; to 10 g of the PSU fraction, 1.5 g of single-walled carbon nanotubes were added and mixed in LM -201 for 30 seconds at room temperature The powder particle size distribution of the obtained mixture is characterized by D10 powder values of 11 µm, D50 powder of 85 µm and D90 powder of 190 µm. The resulting mixture of black color with a weight ratio of single-walled carbon nanotubes to polymer content of 0.15(13 wt.% single-walled carbon nanotubes) were placed in a mold defining the desired bipolar plate shape, 0.18 mm deep, and compression molded at 340°C under a pressure of 10 MPa for 30 seconds (IMC -1811 machine, from ImoNet). The resulting mechanical and electrically conductive properties of the bipolar plate are shown in Table 2.

### Example 9

A thin bipolar plate was made similar to Example 8, however, the weight ratio of single-walled carbon nanotubes to polymer content was 0.075. The bipolar plate was obtained by hot pressing using a die mold with a depth of 0.12 mm. The resulting mechanical and electrically conductive properties of the bipolar plate are shown in Table 2.

### Example 10

A thin bipolar plate was prepared as follows: 15 g of polyphenylene sulfone (PPSU, Radel^{®} R -5800, T_{g} = 220° C. Tₘ = 370° C.) was ground into a powder in a grinding mixer LM -201 (OOO Plaun (Russia) ) for 60 seconds, cut off of 14-200 µm fraction; 1.7 g of single-walled carbon nanotubes were added to 7.3 g of PPSU fraction and mixed in LM -201 for 30 seconds at room temperature The powder particle size distribution of the obtained mixture is characterized by D10 powder values of 13 µm, D50 powder of 80 µm and D90 powder of 180 µm. The resulting mixture of black color with a weight ratio of single-walled carbon nanotubes to polymer content of 0.205 (17 wt.% single-walled carbon nanotubes) were placed in a mold defining the desired bipolar plate shape, 0.2 to 5 mm deep, and compression moulded at 380°C under a pressure of 10 MPa for 30 seconds (IMC -1811 machine, from ImoNet). The resulting mechanical and electrically conductive properties of the bipolar plate are shown in Table 2.

### Example 11

A thin bipolar plate was made similar to Example 10, however, the weight ratio of single-walled carbon nanotubes to polyphenylene sulfone (PPSU) polymer content was 0.28. The bipolar plate was prepared by hot pressing using a die mold with a depth of 0.11 mm. The resulting mechanical and electrically conductive properties of the bipolar plate are shown in Table 2.

### Example 12

A thin bipolar plate was made as follows: 15 g:polyetheretherketone (PEEK, VESTAKEEP 2000 FP, T_{g} = 143° C. Tₘ = 343° C.) was ground into a powder in a grinding mixer LM -201 (Plaun Ltd. (Russia)) for 60 seconds, cut off with a fraction of 14-200 µm; to 8.5 g of the PEEK fraction, 1.5 g of single-walled carbon nanotubes were added and mixed in LM -201 for 30 seconds at room temperature. The resulting mixture of black color with a weight ratio of single-walled carbon nanotubes to PEEK content of 0.165 (15 wt.% single-walled carbon nanotubes) were placed in a mold defining the desired shape of the bipolar plate, 0.3 mm thick, and compression was performed molding at a temperature of 345°C at a pressure of 10 MPa, for 30 seconds (IMC -1811 machine, from ImoNet. The resulting mechanical and electrically conductive properties of the bipolar plate are shown in Table 2.

### Example 13

A thin bipolar plate was made similar to Example 12, however, the weight ratio of single-walled carbon nanotubes to PEEK polymer content was 0.30. The bipolar plate was prepared by hot pressing using a mold with depth of 0.18 mm. The resulting mechanical and electrically conductive properties of the bipolar plate are shown in Table 2.

### INDUSTRIAL APPLICABILITY

The present invention relates to electrically conductive composite materials based on thermoplastic polymers comprising single-walled and/or double-walled carbon nanotubes, and methods of making the same. The invention also relates to electrically conductive thin plates used as bipolar plates in fuel cells, including proton exchange membranes.

### PATENT LITERATURE

Patent Literature 1: US7056452B2, 09.06.2004, IPC: HO 1 B 1/24, C08J3/21, CO8K7/24.
Patent Literature 2: US7629070B2, 22.09.2003, IPC: H01M8/02, H01B1/24.

### NON-PATENT LITERATURE

T.M. Besmann, J.W. Lett, J.J. Henry, E. Lara-Curzio, Carbon/Carbon Composite Bipolar Plate for Proton Exchange Membrane Fuel Cells, J. Electrochem. Soc. (2000) Vol. 147, pp 4083-4086.

## Claims

1. A method for manufacturing a thin electrically conductive plate comprising the steps of:
(1) mixing a powder of single-walled and/or double-walled carbon nanotubes and a thermoplastic polymer powder at a temperature not exceeding the glass transition temperature of the thermoplastic polymer (T_{g}) to form a mixture, the particles of which consist of a core of a thermoplastic polymer and a shell of carbon nanotubes; and
(2) compression molding the mixture obtained in step (1) at a temperature above the glass transition temperature of the thermoplastic polymer (T_{g}) by at least 100 K to form a thin plate of a predetermined shape.

2. The method of claim 1, wherein 90 wt.% of the particles of the mixture have a size greater than 10 µm.

3. The method of claim 1, wherein the thermoplastic polymer powder is selected from the group consisting of the thermally stable polymers: polyvinylidene fluoride, polyphenylene sulfide, polyethersulfone, polysulfone, polyphenylene sulfone or polyetheretherketone or copolymers thereof or derivatives thereof.

4. The method of claim 1, wherein the mixing temperature of the powder of the single-walled and/or double-walled carbon nanotubes and the thermoplastic polymer powder does not exceed the Vogel temperature of the thermoplastic polymer.

5. The method of claim 1, wherein the compression molding temperature is greater than the glass transition temperature of the thermoplastic polymer (T_{g}) by at least 150 K.

6. The method of claim 1, wherein the compression molding temperature is greater than the melting temperature of the thermoplastic polymer (Tₘ).

7. The method of claim 1, wherein the compression molding is performed in an inert gas atmosphere.

8. The method of claim 1, wherein the weight ratio of the carbon nanotubes to the content of the thermoplastic polymer in the mixture is from 0.01 to 0.3.

9. The method of claim 1, wherein the weight ratio of the carbon nanotubes to the content of the thermoplastic polymer in the mixture is from 0.05 to 0.25.

10. A thin bipolar plate for a high-temperature fuel cell with a thickness of less than 1 mm, having gas transporting channels on the surface, and comprising a composite material of thermoplastic polymer and single-walled and/or double-walled carbon nanotubes, **characterized in that** the composite material comprises connected regions with a concentration of carbon nanotubes of more than 1 wt.%, and domains with a size of less than 200 µm, with a local concentration of carbon nanotubes of less than 1 wt.%.

11. The bipolar plate of claim 10, wherein the domains with a local concentration of carbon nanotubes of less than 1% by weight have a size of less than 100 µm.

12. The bipolar plate of claim 10, wherein the plate has a thickness of less than 0.2 mm.

13. The bipolar plate of claim 10, wherein its surface electrical resistance is 10 Ohm/square or less.

14. The bipolar plate of claim 10, wherein its surface electrical resistance is 1 Ohm/square or less.

15. The bipolar plate of claim 10, wherein the flexural modulus is 5 GPa or more at 25 °C.
